# EUROPEAN PATENT SPECIFICATION

(11) **EP 3 115 902 B1**
(45) Date of publication and mention of the grant of the patent: **06.03.2019**
(21) Application number: 16176214.1
(22) Date of filing: 10.01.2013
(51) Int. Cl.: G06F 11/36

(54) **FRAMEWORK FOR AUTOMATED TESTING OF MOBILE APPS**
RAHMENPLAN ZUR AUTOMATISCHEN PRÜFUNG VON MOBILEN APPS
CADRE POUR TEST AUTOMATISÉ D'APPLICATIONS MOBILES

(30) Priority: 10.01.2012 US 201213347059
(43) Date of publication of application: 11.01.2017
(62) Divisional of application: 13150817.8
(73) Proprietor: SAP SE, 69190 Walldorf (DE)
(72) Inventor: BORKOWSKI, Mirko, 69190 Walldorf (DE); GIENGER, Armin, 69190 Walldorf (DE); MECKE, Christoph, 69190 Walldorf (DE)
(74) Representative: Richardt Patentanwälte PartG mbB

(56) References cited:
- US-A1- 2007 277 154
- Paul M Duvall: In: "Continuous Integration Improving Software Quality and Reducing Risk", 1 January 2007 (2007-01-01), Addison-Wesley, XP055038890, pages 1-318, * Chapters 1, 4 and 6. *

## Description

### TECHNICAL FIELD

The present application relates generally to the field of testing mobile
applications, and, in one specific example, to a framework for automated testing of mobile applications.

### BACKGROUND

With the increasing usage of mobile devices, mobile applications (also referred to as apps) are now commonly used on mobile devices. These mobile applications allow the user of the mobile device to access information stored outside of the mobile device. In particular, some applications locally installed on the mobile device may also communicate with a remote server to access additional services, backend functions, and other applications from the remote server.

The testing of mobile applications that use services from remote servers requires different testing tools that focus on separate components. For example, a first testing tool may test whether the application runs correctly on the mobile device. A second testing tool may test whether the remote server responds correctly to the mobile device. Other testing tools may be needed to test different components that interface the mobile device and the remote server. As such, there currently is no solution for end to end testing of different scenarios including mobile applications as well as backend functions of remote servers.

US 2007/277154 A1 discloses a method for testing distributed components. A test case definition indicates how APIs are to be called to test components of a distributed system. A test driver can execute the test case definition to invoke the APIs. Results of the APIs can be stored.

### SUMMARY

It is an objective of embodiments of the invention to provide for an improved method for testing a mobile application, a computer system and a computer program product. Said objective is solved by the subject matter of the independent claims. Advantageous embodiments are described in the dependent claims.

In one aspect, the invention relates to a method for testing a mobile application, the method comprises: installing the mobile application to be operated on a mobile device based on a source code of the mobile application, the mobile application configured to operate with a backend system, wherein the mobile device is remotely connected to the backend system via a network; determining configuration data for a predefined test scenario of the mobile application, the predefined test scenario including at least one test case, wherein the at least one test case comprises a first test to be performed on the mobile device and a second test to be performed on the backend system. The method further comprises providing a first server for performing the first test on the mobile device; providing a second server for performing the second test on the backend system. The method further comprises receiving a first test script describing first program instructions to be executed by the first server to perform the first test; receiving a second test script describing second program instructions to be executed by the second server to perform the second test, wherein the first and second test scripts are adapted to exchange their respective intermediate output data at runtime of the scripts. The term "script" as used herein refers to a program having a set of instructions in a programming language or procedural language. The method further comprises storing the configuration data, the first and the second test scripts in a repository; creating jobs for performing the first test and the second test; scheduling the created jobs; in response to the scheduling controlling the first and the second server to perform the first test and the second test respectively by automatically executing the first test script on the first server and the second test script on the second server using the stored configuration data; wherein the executing comprises exchanging the intermediate output data between the first server and the second server at runtime of the scripts; and generating a log of test results from the first and second tests performed on the mobile device and on the backend system.

These features may be advantageous as they may provide an end to end automated test for mobile applications by integrating different test tools (at least two test tools) into one common framework. Such an integrated test may consist of several steps where some are executed on the mobile device and some are run on the backend system, and thus may permit to drive and verify the stack used by the mobile application at various points. This may provide a reliable test and cross check of the mobile application.

According to one embodiment, the first test comprises a first set of steps, wherein receiving the first test script further comprises dividing the first test script into a first group of program components, wherein each step of the first set of steps is performed by executing a corresponding program component of the first group of program components.

According to one embodiment, the second test comprises a second set of steps, wherein receiving the second test script further comprises dividing the second test script into a second group of program components, wherein each step of the second set of steps is performed by executing a corresponding program component of the second group of program components.

By splitting up the test into several steps, a detailed analysis and debugging of the mobile application function may be achieved.

According to one embodiment, the program component comprises a program function. The term "program function" as used herein refers to a part of source code (e.g. test script) within that performs a specific task (e.g. a step of the test). This may be advantageous as it may provide a modular testing tool that is easy to manage and run.

According to one embodiment, the controlling is performed by one of keyword driven test tool, data-driven test tool and a modularity-driven test tool. This may be advantageous as the present method may be seamlessly integrated in different computing test systems adopting different test methods. The present method may use standard components and may thus allow an easy exchange of test components.

According to one embodiment, the method further comprises providing a table for the first and second test, the table having one or more entries, each entry comprises a keyword, wherein each keyword is associated with at least one program component and input data, wherein the keyword comprises character strings reflecting a command to execute the associated at least one program component using the input data.

This may be advantageous as it may be easier to read keyword tables than conventional scripts, and may thus fasten the whole test process. This keyword driven test may be used in such a way to be reusable for multiple tests for the same mobile application, and also for tests across multiple mobile applications. Another advantage of using the keyword driven test tool may be that it may be easily extended to include other test tools, by just adding corresponding keywords and corresponding test scripts in the table.

According to one embodiment, the controlling comprises reading each keyword of the table and executing associated program components.

According to one embodiment, wherein the creating and scheduling of the jobs is performed by a Jenkins server. A Jenkins server is a server that runs a Jenkins application that monitors executions of repeated jobs, such as building a software project.

According to one embodiment, the configuration data comprises the first and second test scripts locations.

According to one embodiment, the executing comprises the steps of executing the second test script for creating test data; executing the first test script using the test data; comparing output data resulting from the execution of the first test script with the test data. This may be advantageous as it may provide a reliable testing method based on a cross check of input data from the backend system and output data of the mobile application.

According to one embodiment, the generating a log of test results comprises capturing screenshots of mobile application outputs after execution of each program component. This may be advantageous as it may easy debugging the mobile application function.

In another aspect, the invention relates to a computer program product comprising computer executable instructions to:
- install the mobile application to be operated on a mobile device based on a source code of the mobile application, the mobile application configured to operate with a backend system, wherein the mobile device is remotely connected to the backend system via a network;
- determine configuration data for a predefined test scenario of the mobile application, the predefined test scenario including at least one test case, wherein the at least one test case comprises a first test to be performed on the mobile device and a second test to be performed on the backend system;
- receive a first test script describing first program instructions to be executed by a first server to perform the first test;
- receive a second test script describing second program instructions to be executed by a second server to perform the second test, wherein the first and second test scripts are adapted to exchange their respective intermediate output data at runtime of the scripts;
- store the configuration data, the first and the second test scripts in a repository;
- create jobs for performing the first test and the second test;
- schedule the created jobs;
- in response to the scheduling control the first and the second server to perform the first test and the second test respectively by automatically executing the first test script on the first server and the second test script on the second server using the stored configuration data; wherein the executing comprises exchanging the intermediate output data between the first server and the second server at runtime of the scripts; and
- generate a log of test results from the first and second tests performed on the mobile device and on the backend system.

In another aspect, the invention relates to a computer system for testing a mobile application, the computer system comprising:
- a first server configured to install the mobile application to be operated on a mobile device based on a source code of the mobile application, the mobile application configured to operate with a backend system, wherein the mobile device is remotely connected to the backend system via a network;
- a test server configured to determine configuration data for a predefined test scenario of the mobile application, the predefined test scenario including at least one test case, wherein the at least one test case comprises a first test to be performed on the mobile device and a second test to be performed on the backend system;
- the first server configured to receive a first test script describing first program instructions to be executed by the first server to perform the first test;
- a second server configured to receive a second test script describing second program instructions to be executed by the second server to perform the second test, wherein the first and second test scripts are adapted to exchange their respective intermediate output data at runtime of the scripts;
- a repository for storing the configuration data, the first and the second test scripts;
- a third server configured to create jobs for performing the first test and the second test;
- the third server configured to schedule the created jobs;
- the test server configured to control, in response to the scheduling, the first and the second server to perform the first test and the second test respectively by automatically executing the first test script on the first server and the second test script on the second server using the stored configuration data; wherein the executing comprises exchanging the intermediate output data between the first server and the second server at runtime of the scripts; and
- the test server configured to generate a log of test results from the first and second tests performed on the mobile device and on the backend system.

In another aspect, the invention relates to a computer-implemented method comprising: building a mobile application to be operated on a mobile device based on a source code of the mobile application, the mobile application configured to operate with a backend system; defining a test configuration for the mobile application and the backend system; performing an automated test with the test configuration on the mobile application on the mobile device and the backend system; and generating a log of test results from the automated test performed on the mobile application and on the backend system.

According to one embodiment, the automated test comprises a plurality of tests from testing tools corresponding to the mobile device and components of the backend system.

According to one embodiment, the source code of the mobile application corresponds to a test script stored in a content management system.

According to one embodiment, the automated test comprises a plurality of test scripts corresponding to a plurality of test scenarios.

According to one embodiment, the test configuration comprises a location of the test script, test data parameters, and test settings.

According to one embodiment, the backend system further comprises: a frontend server configured to authenticate a user of the mobile application on the mobile device; and a backend server configured to provide an application corresponding to the mobile application.

According to one embodiment, the backend server further comprises:
an application server configured to generate the application having a data protocol;
a gateway adapter configured to tailor a data model and a functionality of the application of the application server for the mobile application; and
a gateway configured to interface the mobile application with the data protocol associated with the application.

According to one embodiment, the method further comprised:
generating a front end automated test and a back end automated test based on the test configuration, a front end test script, and a back end test script;
performing the front end automated test on the frontend server and the back end automated test on the backend server; and
exchanging result data between the front end automated test and the back end automated test.

In another aspect, the invention relates to a system comprising:
a mobile application building server configured to build a mobile application to be operated on a mobile device based on a source code of the mobile application, the mobile application configured to operate with a backend system;
a test client configured to define a test configuration for the mobile application and the backend system; and a test server configured to perform an automated test with the test configuration on the mobile application on the mobile device and the backend system and to generate a log of test results from the automated test from the automated test on the mobile application and on the backend system.

According to one embodiment, the automated test comprises
a plurality of tests from testing tools corresponding to the mobile device and components of the backend system.

According to one embodiment, the source code of the mobile application corresponds to a test script stored in a content management system.

According to one embodiment, the automated test comprises a plurality of test scripts corresponding to a plurality of test scenarios.

According to one embodiment, the test configuration comprises a location of the test script, test data parameters, and test settings.

According to one embodiment, the backend system further comprises:
a frontend server configured to authenticate a user of the mobile application on the mobile device; and a backend server configured to provide an application corresponding to the mobile application.

According to one embodiment, the backend server further comprises:
an application server configured to generate the application having a data protocol;
a gateway adapter configured to tailor a data model and a functionality of the application of the application server for the mobile application; and
a gateway configured to interface the mobile application with the data protocol associated with the application.

According to one embodiment, the test server is configured to generate a front end automated test and a back end automated test based the test configuration, a front end test script, and a back end test script, to perform the front end automated test on the frontend server and the back end automated test on the backend server; and to exchange result data between the front end automated test and the back end automated test.

In another aspect, the invention relates to a non-transitory machine-readable storage medium storing instructions which, when executed by at least one processor, performs operations comprising: building a mobile application to be operated on a mobile device based on a source code of the mobile application, the mobile application configured to operate with a backend system; defining a test configuration for the mobile application and the backend system; performing an automated test with the test configuration on the mobile application on the mobile device and the backend system; and generating a log of test results from the automated test from the automated test on the mobile application and on the backend system.

According to one embodiment, the backend system further comprises:
a frontend server configured to authenticate a user of the mobile application on the mobile device; and a backend server configured to provide an application corresponding to the mobile application.

According to one embodiment, the backend server further comprises:
an application server configured to generate the application having a data protocol;
a gateway adapter configured to tailor a data model and a functionality of the application of the application server for the mobile application; and
a gateway configured to interface the mobile application with the data protocol associated with the application.

According to one embodiment, the non-transitory machine-readable storage medium further comprises: generating a front end automated test and a back end automated test based the test configuration, a front end test script, and a back end test script;
performing the front end automated test on the frontend server and the back end automated test on the backend server; and exchanging result data between the front end automated test and the back end automated test.

It is understood that one or more of the aforementioned embodiments may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. The term computer readable-storage medium also refers to various types of recording media capable of being accessed by the computer de-vice via a network or communication link. For example a data may be retrieved over a modem, over the internet, or over a local area network. Computer executable code embodied on a computer readable medium may be transmitted using any appropriate medium, including but not limited to wireless, wireline, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Small-talk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It will be understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'database' as used herein encompasses a data file or repository which contains data that may be accessed by a processor. Examples of databases are, but are not limited to: a data file, a relational database, a file system folder containing data files, and a spreadsheet file.

### BRIEF DESCRIPTION OF THE DRAWINGS

Some embodiments are illustrated by way of example and not limitation in the figures of the accompanying drawings in which:
FIG. 1 is a block diagram depicting an example environment within which example embodiments may be deployed;
FIG. 2A is a block diagram depicting an example embodiment of a mobile test automation architecture;
FIG. 2B is a block diagram depicting another example embodiment of a mobile test automation architecture;
FIG. 3 is a block diagram depicting an example embodiment of a mobile test automation tool;
FIG. 4 is a flowchart depicting an example embodiment of a method for operating a mobile test automation tool;
FIG. 5 is a flowchart depicting another example embodiment of a method for operating a mobile test automation tool;
FIG. 6 is a block diagram of an example computer system on which methodologies described herein may be executed;
FIG. 7 depicts a computer system for testing a mobile application

### DETAILED DESCRIPTION

In the following description, for purposes of explanation, numerous specific details are set forth in order to provide an understanding of various embodiments of the inventive subject matter. It will be evident, however, to those skilled in the art that embodiments may be practiced without these specific details. Further, to avoid obscuring the inventive subject matter in unnecessary detail, well-known instruction instances, protocols, structures, and techniques have not been shown in detail. As used herein, the term "or" may be construed in an inclusive or exclusive sense. The term "interface" may be construed to include an application program interface (API) or a user interface. The term "database" may be construed to include a database or a NoSQL or non-relational data store (e.g., Google's BigTable or Amazon's Dynamo). The term "business object" may mean an object that represents an entity of a business inside a software application. For example, a business object may represent a person (e.g., an employee of a company) or a concept (e.g., a process within a company) inside an enterprise information management software application.

A framework for automated testing of mobile applications is disclosed.

A mobile application to be operated on a mobile device is built based on a source code of the mobile application. The mobile application operates with a backend system. A test configuration for the mobile application and the backend system are defined. An automated test is performed with the test configuration on the mobile application on the mobile device and the backend system. A log of test results is generated from the automated test performed on the mobile application and on the backend system.

In one embodiment, the automated test has a number of tests from testing tools corresponding to the mobile device and components of the backend system. The source code of the mobile application corresponds to a test script stored in a content management system. The automated test comprises a number of test scripts corresponding to a number of test scenarios. The test configuration comprises, for example, a location of the test script, test data parameters, and test settings.

In one embodiment, the backend system has a frontend server and a backend server. The frontend server authenticates a user of the mobile application on the mobile device. The backend server provides an application corresponding to the mobile application.

In one embodiment, the backend server has an application server, a gateway adapter, and a gateway. The application server generates the application having a data protocol. The gateway adapter tailors a data model and a functionality of the application of the application server for the mobile application. The gateway interfaces the mobile application with the data protocol associated with the application.

In one embodiment, the test server generates a front end automated test and a back end automated test based the test configuration, a front end test script, and a back end test script. The test server then performs the front end automated test on the front end server and the back end automated test on the back end server. Result data are exchanged between the front end automated test and the back end automated test.

The present disclosure solves the lack of having an automated end to end testing of scenarios including mobile applications as well as backend functions and applications. Typically, automated testing system have limited specific coverage. For example, an integration test may test only certain aspects of the backend system. A unit test may test another aspect of the backend system. In another example, other tests may test some aspects of the front end system leaving out some other parts of the backend system. The present disclosure solves those shortcomings.

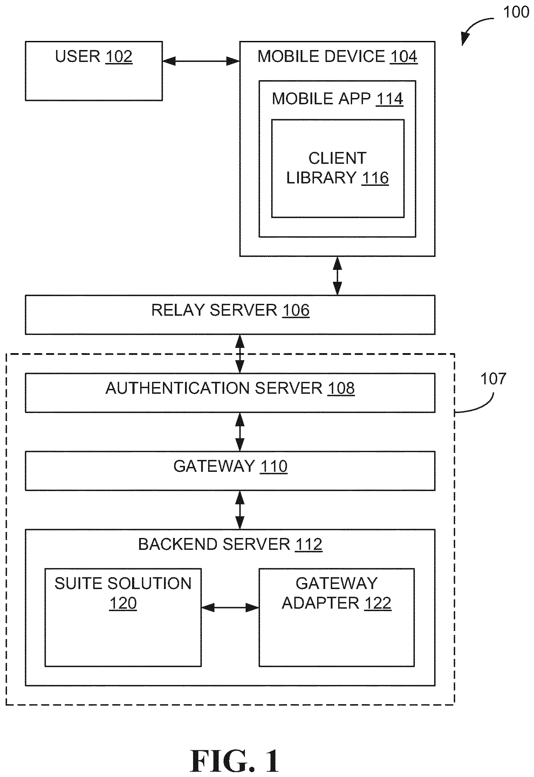

FIG. 1 is a block diagram depicting an example environment 100 within which example embodiments may be deployed. A user 102 operates a mobile application 114 (also referred to as a native app or app) on a mobile device 104. In one embodiment, the native apps uses their own respective Software Development Kits (SDK). The mobile application 114 uses a client library 116 that is provided for handling another data protocol (e.g., SAP Data Protocol, on-boarding, etc.).

In one embodiment, the mobile device 104 may include a mobile computing device such as a smart phone, a mobile computer, a tablet computer, and so forth. The mobile device 104 is capable of loading and running applications. The mobile device 104 is also capable of network communication with other computers.

The relay server 106 communicates with a corporate intranet 107. In one embodiment, the relay server 106 provides functionality similar to a reverse proxy. The corporate intranet 107 includes an authentication server 108, a gateway 110, and a backend server 112.

The authentication server 108, for example, provides functionality for user on-boarding, user authentication, distribution of X509 certificates, notifications via push, and the like. The gateway 110 may be used for the translation to a proprietary data protocol such as SAP Data protocol of SAP, Germany.

The backend server 112 includes, for example, an application (e.g, SAP Object Programming Suite System). In one embodiment, the backend server 112 includes a suite solution 120 and a gateway adapter 122. The suite solution 120 includes, for example, backend functionality of the application. The gateway adapter 122 exposes the data model and the functionality that are tailored to the needs of the specific mobile application.

Those of ordinary skill in the art will recognize that the testing architecture is not limited to the present mobile application platforms as illustrated in the present description. The present concept is also applicable to other types of mobile application platforms and other types of backend systems.

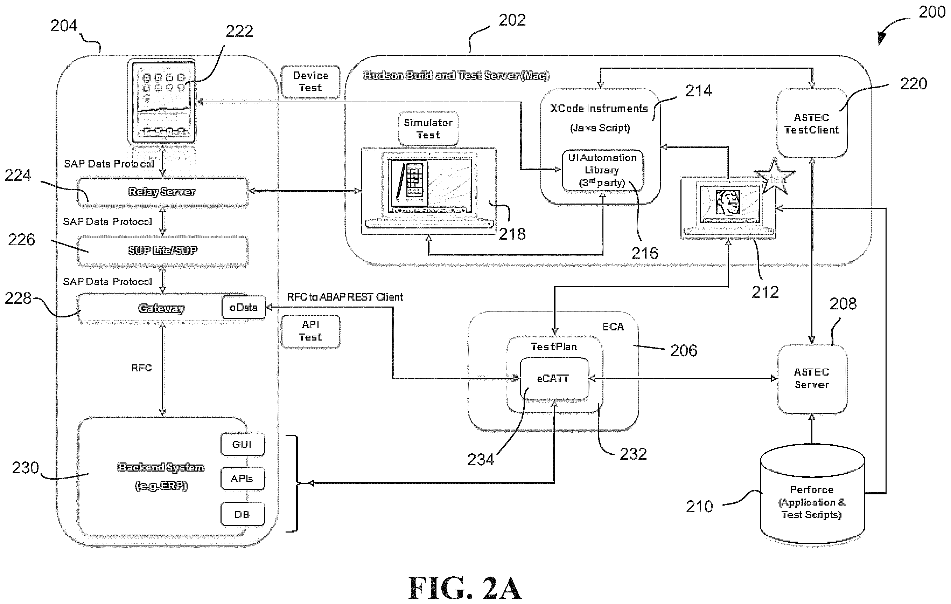

FIG. 2A is a block diagram depicting an example embodiment of a mobile test automation architecture 200. Automated tests may test a whole stack used by mobile apps. FIG. 2A illustrates an example of a Business Suite organization. Those of ordinary skill in the art will recognize that other types of architectures may also be applicable. The architecture of mobile applications may be different and adjusted according to the types of applications being accessed from the mobile device.

The mobile test automation architecture 200 includes a build and test server 202, a delivery architecture 204, a test configuration server 206, a storage server 208, and a storage device 210.

The build and test server 202, the delivery architecture 204, the test configuration server 206, the storage server 208, and the storage device 210 may be coupled to each other via a network (not shown). The network enables communication between systems. Accordingly, the network may be a mobile telephone network, a Plain Old Telephone (POTS) network, a wired network, a wireless network (e.g., a WiFi or WiMax network), or any suitable combination thereof. The communication may be based on any communication protocols.

Examples of communication protocols include Transmission Control Protocol/Internet Protocol (TCP/IP), HyperText Transfer Protocol (HTTP), File Transfer Protocol (FTP), Simple Mail Transfer Protocol (SMTP), Post Office Protocol (POP), Internet Message Access Protocol (IMAP), Wireless Access Protocol (WAP), Gopher, wireless Internet protocols, and instant messaging protocols. The network may be implemented using the Internet, a wide area network (WAN), a local area network (LAN), or any suitable combination thereof.

The build and test server 202 is configured to provide a framework for an automated end to end testing of scenarios. In one embodiment, the build and test server 202 includes an Xcode instruments module 214, a testing client 212, a simulator 218, and an ASTEC test client 220. The Xcode instrument module 214 may operate using JavaScript and may include a UI automation library 216 provided by a third party. In one embodiment, the testing client 212 may utilize continuous integration (e.g., Hudson) to apply quality control in small pieces that are applied frequently instead of applying quality control after completing all development.

The testing client 212 obtains testing configurations (e.g., test plan 232 and eCATT 234"extended Computer Aid Testing Tool") associated with a mobile application from test configuration server 206. Standard features associated with the test client 212 may include the ability to schedule and management when (scheduling) and how (management of several tests including aggregation of results) the tests are performed on the front end and the back end. Test result data are exchanged between the front end automated test and the back end automated test. Both tests are connected by exchanging data and run in a well defined order within the overall test scenario. In one embodiment, several tests on both sides (front end and back end) could run alternating on frontend and backend.

Test configuration server 206 communicates with storage server 208 which retrieves applications and test scripts from storage device 210. The applications and test scripts are loaded in the testing client 212. In one embodiment, ASTEC Test Client 220 communicates with storage server 208 to retrieve the applications and test scripts from storage device 210.

The delivery architecture 204 includes a mobile device 222 communicating using a proprietary data protocol (e.g., SAP Data Protocol) with relay server 224, authentication server 226, gateway 228, and back end system 230. As previously described, the authentication server 226 provides functionality for user on-boarding, user authentication, distribution of X509 certificates, notifications via push, and the like. The gateway 228 may be used for the translation to the SAP Data protocol.

The backend system 230 includes, for example, an application (e.g., SAP Object Programming Suite System). For example, the application may allow manipulating or displaying a visual representation of an instance of a business object. The visual representation of the business object may include a visual representation of one or more data items of the business object. A data item of the business object may be a unit of data corresponding to the business object that is managed by an application that provides the business object. The visual representation of the business object may include a diagram of the relationships between the business object and the one or more data items of the business object. The visual representation of the business object may also include a diagram of the relationships between the one or more data items of the business object.

As such, the testing client 212 is capable of orchestrating the entire testing process from end to end (front end to back end) by communicating with various components configured to test corresponding modules. For example, the testing client 212 communicates with Xcode instruments module 214 to perform a device test on mobile device 222. In one embodiment, the simulator 218 communicates with relay server 224. Furthermore, the testing client 212 communicates with test plan 232 to perform an API test with gateway 228. The testing client 212 communicates with eCATT 234 to perform a test on the back end system 230 based on the application of Xcode instruments module 214.

Therefore, the test automation framework is able to drive and verify this stack at various points. The following points of interaction are possible:
Mobile App (platform dependent)
Data service calls
ABAP Backend

One advantage in the design of the present test automation framework system is the use of standard components wherever possible, which allows for an easy exchange of test components (usually the test automation tool for UI testing of various platforms).

In detail, the integrated test automation framework performs the following steps, all controlled by a Continuous Integration (e.g, Hudson) and Test server 202 installed on a central testing client 212:
Sync sources (application and test scripts) from the storage device 210 (e.g. Perforce)
Build the App (Xcode Instruments module 214 provides a JavaScript library with APIs that simulate user interactions on the mobile device 222 using the simulator 218)
Prepare the Test Case via UI Automation Library 216
Set up test execution environment
Execute the automated tests via appropriate test automation tools (e.g., eCATT 234, Xcode Instruments module 214)
Write a log and send result

In order to use the test automation framework, several configurations may be done before (e.g., the framework needs to know the right perforce path, the name of the script, test data parameters and other settings). All those configuration parameters are stored in the excel config.xls, from where the framework generates the right settings when the setup phase in Hudson is started.

With respect to the Xcode Instruments module 214, in order to achieve reusable and flexible scripts, it is a good practice in test automation to separate the actual test coding test data (e.g., expected values which need to be checked) coding for App settings, like logon-data so scripts can be run against a different backend system or SUP with different data. Unfortunately, this separation is not easy with JavaScript as parameters that are stored externally cannot be imported into the script. The next sections illustrate how the separation of test data and settings coding is implemented via the include mechanism in JavaScript.

The creation of JavaScript for UI automation in instruments consists of two phases:
1. Create the base JavaScript by using the "capture" function in Instruments "Automation" template
2. Create the productive script by refining the recorded script with checks, reuse functions, and test data.

The challenge in an end to end automated test for mobile apps is to integrate different test tools into one common framework. Such an integrated test consists of several steps where some are executed on the mobile device or simulator (run via instruments tool), and some are run in one or more backend systems run by eCATT or another automation tool than can be started from eCATT. In order to achieve this, a TAPS solution from SAP BOBJ may be used. TAPS is based on integration of eCATT infrastructure with ASTEC, the test automation engine of SAP BOBJ.

With respect to storage server 208, the ASTEC automation engine is based on "tasks" which describe the test client 220 (i.e. mobile test client) and the steps that need to be executed on the test client (called work units). Work units may be plugins that perform certain actions on the test client 220, such as starting the automation toll, returning results, and the like. Whenever a task is launched from the storage server 208, a complete reinstallation of the ASTEC client software is done and the work units are started. It is possible to exchange parameters between work units.

TAPS integrates the ASTEC server to drive the test automation tool on the mobile frontend with eCATT and SAP's test workbench. Here, eCATT plays the leading part: an eCATT script is used to drive the backend tests as well the tasks on the ASTEC server and, hence, the frontend tests. eCATT makes use of the Webservice interface of ASTEC to start the task and to check the status of the task. Since Webservice can be launched asynchronously at the start task, another Webservice may be used to check the status. The eCATT repeatedly waits and checks the status until the Webservice returns the information that the task has either successfully finished or aborted. For the backend tests, other eCATT scripts are used. Finally, all eCATT scripts are integrated into one main script calling the backend as well as the ASTEC scripts via a REF command.

For mobile test automation, one task is used that defines:
- the automation test client (MAC),
- a work unit that starts the test automation tool (Instruments) from the command line and,
- another work unit that exports the result log.

By defining a test configuration for this main script, the test scenario can be integrated into SAP's test workbench (i.e. tests can be included into test plans and packages).

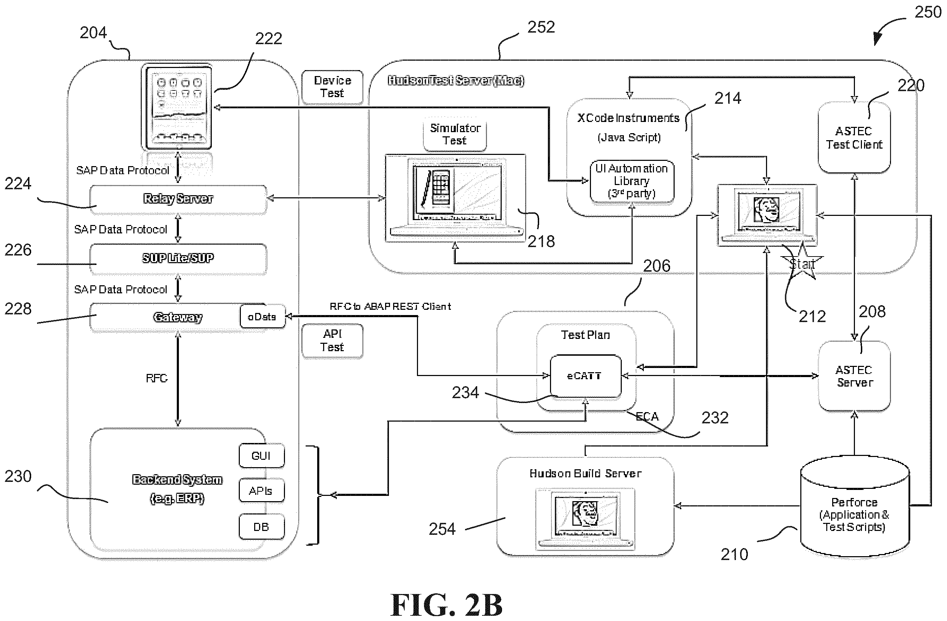

FIG. 2B is a block diagram depicting another example embodiment of a mobile test automation architecture 250. In contrast to FIG. 2A, Hudson Build Server 254 may be located separately from Hudson Test Server 252. The remaining parts numbers on FIG. 2B are the same as FIG. 2A.

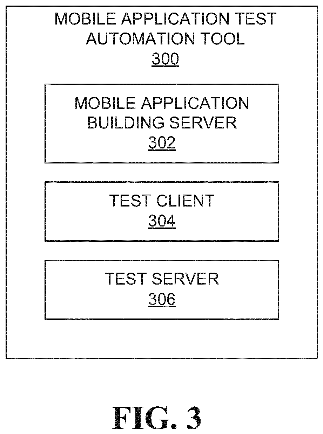

FIG. 3 is a block diagram depicting an example embodiment of a mobile application test automation tool 300. The mobile application test automation tool 300 includes a mobile application building server 302, a test client 304, and a test server 306.

The mobile application building server 302 builds a mobile application to be operated on a mobile device based on a source code of the mobile application. The mobile application is configured to operate with a backend system.

The test client 304 defines a test configuration for the mobile application and the backend system.

The test server 306 performs an automated test with the test configuration on the mobile application on the mobile device and the backend system. The test server 306 also generates a log of test results from the automated test performed on the mobile application and the backend system.

In one embodiment, the automated test performed by test server 306 comprises several tests from different testing tools corresponding to the mobile device and components of the backend system. For example, the automated test may include test scripts corresponding to test scenarios.

The source code of the mobile application may correspond to a test script stored in a content management system. As previously described, the test configuration may include a location of the test script, test data parameters, and test settings.

In one embodiment, the backend system includes a frontend server and a backend server. The frontend server authenticates a user of the mobile application on the mobile device. The backend server provides an application corresponding to the mobile application.

In one embodiment, the backend server includes an application server, a gateway adapter, and a gateway. The application server generates the application having a data protocol (SAP Data Protocol). The gateway adapter tailors a data model and a functionality of the application of the application server for the mobile application. The gateway interfaces the mobile application with the data protocol associated with the application.

In one embodiment, the test server 306 generates a front end automated test based on the test configuration and a front end test script. The test server 306 also generates a back end automated test based on the test configuration and a back end test script, performs the front end automated test on the frontend server, and performs the back end automated test on the backend server.

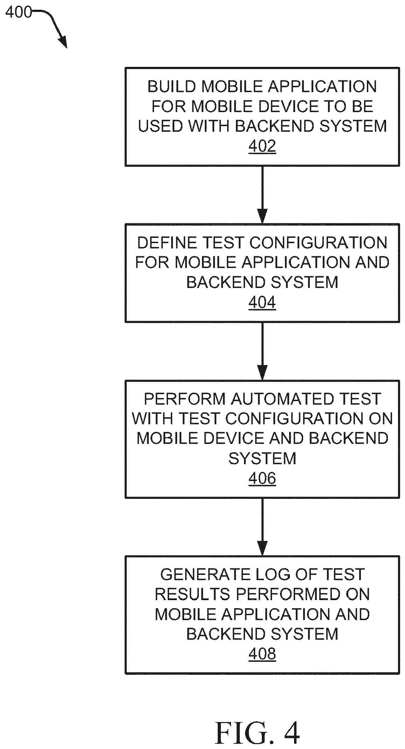

FIG. 4 is a flowchart depicting an example embodiment of a method 400 for operating a mobile test automation tool. At operation 402, a mobile application is built to be operated on a mobile device or simulated on the mobile device based on a source code of the mobile application. The mobile application may be configured to operate with a backend system. In one embodiment, the mobile application building server 302 of FIG. 3 performs operation 402.

At operation 404, a test configuration is defined for the mobile application and the backend system. In one embodiment, the test client 304 of FIG. 3 performs operation 404.

At operation 406, an automated test with the test configuration is performed on the mobile application on the mobile device and the backend system.
In one embodiment, the test server 306 of FIG. 3 performs operation 406 and may generate a log of test results from the automated test at operation 408.

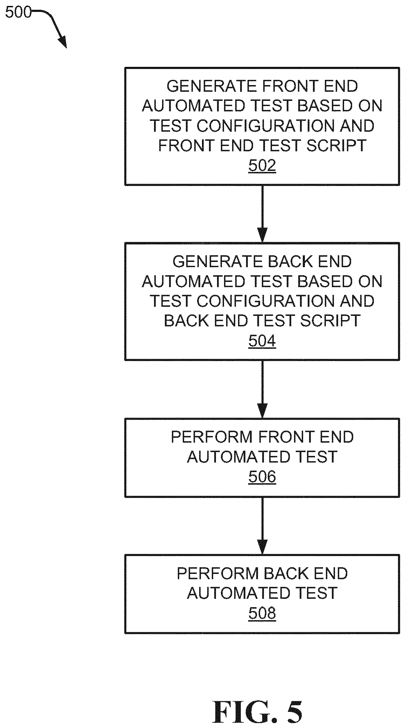

FIG. 5 is a flowchart depicting another example embodiment of a method 500 for operating a mobile test automation tool. At operation 502, a front end automated test is generated based the test configuration and a front end test script. In one embodiment, the test client 220 performs the operation 502.

At operation 504, a back end automated test is generated based on the test configuration and a back end test script. In one embodiment, the ECA (Extended Computer Aid) server 206 performs the operation 504.

At operation 506, the front end automated test is performed on the frontend server. In one embodiment, the test client 220 performs the operation 506.

At operation 508, the back end automated test is performed on the backend server. In one embodiment, the ECA server 206 performs the operation 508.

### MODULES, COMPONENTS AND LOGIC

Certain embodiments are described herein as including logic or a number of components, modules, or mechanisms. Modules may constitute either software modules (e.g., code embodied on a machine-readable medium or in a transmission signal) or hardware modules. A hardware module is a tangible unit capable of performing certain operations and may be configured or arranged in a certain manner. In example embodiments, one or more computer systems (e.g., a standalone, client, or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired) or temporarily configured (e.g., programmed) to operate in a certain manner and/or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices and can operate on a resource (e.g., a collection of information). The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the network 120) and via one or more appropriate interfaces (e.g., APIs).

### ELECTRONIC APPARATUS AND SYSTEM

Example embodiments may be implemented in digital electronic circuitry, or in computer hardware, firmware, software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a stand-alone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry (e.g., a FPGA or an ASIC).

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures require consideration. Specifically, it will be appreciated that the choice of whether to implement certain functionality in permanently configured hardware (e.g., an ASIC), in temporarily configured hardware (e.g., a combination of software and a programmable processor), or a combination of permanently and temporarily configured hardware may be a design choice. Below are set out hardware (e.g., machine) and software architectures that may be deployed, in various example embodiments.

### EXAMPLE MACHINE ARCHITECTURE AND MACHINE-READABLE MEDIUM

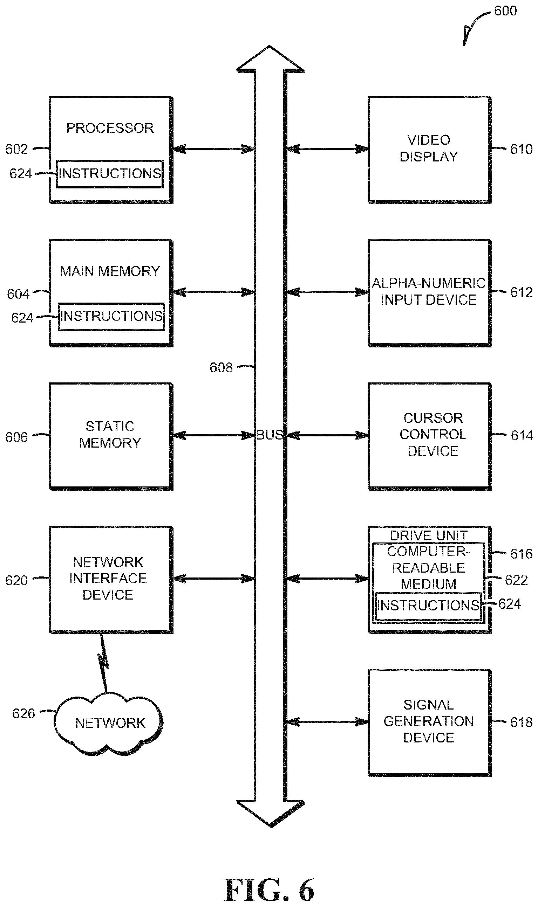

FIG. 6 is a block diagram of machine in the example form of a computer system 600 within which instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in a server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processor 602 (e.g., a central processing unit (CPU), a graphics processing unit (GPU) or both), a main memory 604 and a static memory 606, which communicate with each other via a bus 608. The computer system 600 may further include a video display unit 610 (e.g., a liquid crystal display (LCD) or a cathode ray tube (CRT)). The computer system 600 also includes an alphanumeric input device 612 (e.g., a keyboard), a user interface (Ul) navigation (or cursor control) device 614 (e.g., a mouse), a disk drive unit 616, a signal generation device 618 (e.g., a speaker) and a network interface device 620.

### MACHINE-READABLE MEDIUM

The disk drive unit 616 includes a machine-readable medium 622 on which is stored one or more sets of instructions and data structures (e.g., software) 624 embodying or utilized by any one or more of the methodologies or functions described herein. The instructions 624 may also reside, completely or at least partially, within the main memory 604 and/or within the processor 602 during execution thereof by the computer system 600, the main memory 604 and the processor 602 also constituting machine-readable media. The instructions 624 may also reside, completely or at least partially, within the static memory 606.

While the machine-readable medium 622 is shown in an example embodiment to be a single medium, the term "machine-readable medium" may include a single medium or multiple media (e.g., a centralized or distributed database, and/or associated caches and servers) that store the one or more instructions or data structures. The term "machine-readable medium" shall also be taken to include any tangible medium that is capable of storing, encoding or carrying instructions for execution by the machine and that cause the machine to perform any one or more of the methodologies of the present embodiments, or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices (e.g., Erasable Programmable Read-Only Memory (EPROM), Electrically Erasable Programmable Read-Only Memory (EEPROM), and flash memory devices); magnetic disks such as internal hard disks and removable disks; magneto-optical disks; and compact disc-read-only memory (CD-ROM) and digital versatile disc (or digital video disc) read-only memory (DVD-ROM) disks.

### TRANSMISSION MEDIUM

The instructions 624 may further be transmitted or received over a communications network 626 using a transmission medium. The instructions 624 may be transmitted using the network interface device 620 and any one of a number of well-known transfer protocols (e.g., HTTP). Examples of communication networks include a LAN, a WAN, the Internet, mobile telephone networks, POTS networks, and wireless data networks (e.g., WiFi and WiMax networks). The term "transmission medium" shall be taken to include any intangible medium capable of storing, encoding, or carrying instructions for execution by the machine, and includes digital or analog communications signals or other intangible media to facilitate communication of such software.

Although an embodiment has been described with reference to specific example embodiments, it will be evident that various modifications and changes may be made to these embodiments without departing from the broader scope of the present disclosure. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description. The scope of the invention as a whole, however, is strictly limited by the technical scope of the appended claims.

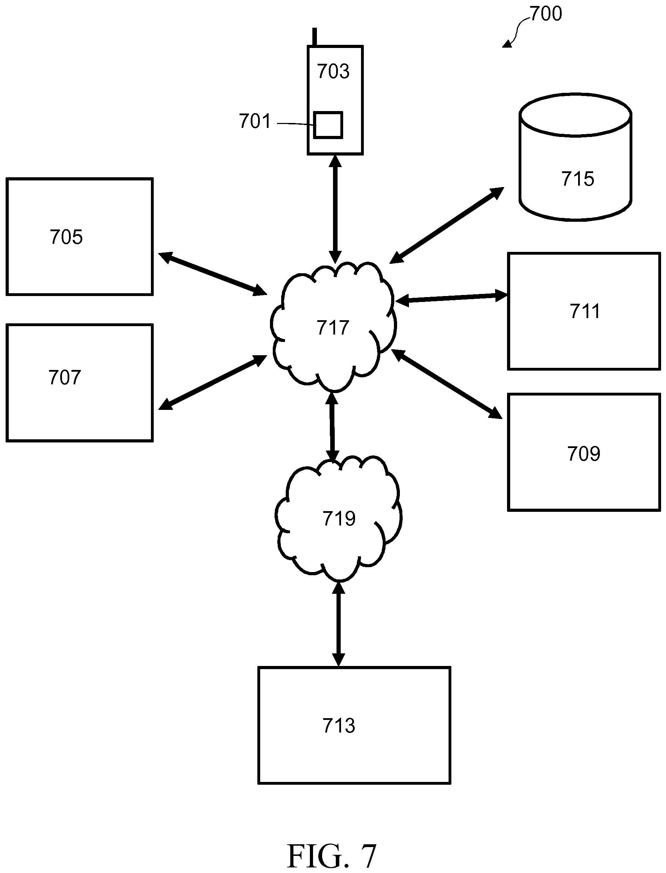

FIG.7 depicts a computer system 700 for an automated test of a mobile application. The computer system is shown containing a mobile device 703, server systems 705-711 and a backend system 713. The mobile device 703 may be connected to the backend system 713 via a network 717-719, which may be a public network, such as the Internet 719, a private network, such as a wide area network (WAN), or a combination thereof. In this example, the server systems 705-711, storage device 715 and the mobile device 703 are connected to each other via the private network 717. The connection to the external backend system 713 is done via the network 719. The storage device 715 may be used for storing applications and test scripts used by the computer system 700. The storage device 715 may be for example a Perforce repository.

The mobile device 703 comprises at least one mobile application 701. The mobile application 701 is installed on the mobile device 703 using a source code of the mobile application which is stored in a storage unit of the mobile device 703. The mobile application 701 is configured to operate with the backend system 713. For example, when the mobile application 701 is executed by the mobile device 703, a communication of various data associated with the mobile application 701 with the backend system 713 may be performed. An example of the mobile application 701 may be an INTERVIEW ASSISTANT mobile application that operates with an E-RECRUITING backend system. The backend system 713 may be a remote server. The backend system 713 may be for example an SAP Enterprise Resource Planning (ERP) server.

Before being used, the mobile application 701 may be tested to evaluate its expected performance when executed on the mobile device 703 and on the backend system 713. For example, the developer of the mobile application may define one or more test scenarios of the mobile application 701, each including at least one test case. Since the mobile application 701 is operating with the backend system 713, the test case may comprise a first test to be performed on the mobile device 703 and a second test to be performed on the backend system 713. In order to perform these tests, several configurations may be performed before executing the tests, e.g. the execution of the mobile application 701 may require the right perforce path, the name of the scripts, test data parameters and other settings. All those configuration data may be stored in an excel file.

The excel file may comprise, for example, two tables. The first table describes the test cases:

| | |
|---|---|
| STD | Standalone Test Demo mode |
| STO | Standalone Test Online mode |
| GTD | Generic Test Demo mode |
| GTO | Generic Test Online mode |
| MOI-HP | MObile Integrationtest - Happy Path |
| MOI-TC1 | MObile Integrationtest - Testcase 1 |

In the first column of the first table the test case ID is defined. The second column contains a description of the test cases.

The second table shows typical configuration data for the test cases:

| Parameter name | Meaning |
|---|---|
| TARGETNAME | Name of the ".app" file |
| SCRIPTNAME | Name of the test scripts |
| PERFORCEPROJECTNAME | Name of project in Perforce |

Following the INERVIEW ASSISTANT mobile application example, the test case may comprise the following steps:
1. Creating a new candidate for a job interview in the backend system 713, associating some documents to the candidate and synchronizing these documents with the mobile device 703. This step is performed in the backend system.
2. Testing on the mobile device, if the candidate appears in the manager's work list stored in the mobile device and if the documents were successfully transferred as well and performing an evaluation of the candidate, adding some comments and submitting this to the backend system.
3. Checking if the evaluation and the comments were successfully committed.

In this example, the first test comprises the step 2) and the second test comprises the steps 1) and 3).

The server system 705 is used to perform the first test on the mobile device 703. The server system 705 may be for example Xcode® instruments module. The server system 707 is used to perform the second test on the backend system 713. The server system 707 may be for example the extended Computer Aid Testing Tool eCATT of SAP.

A first test script to perform the first test may be received for example from the developer of the mobile application. The generation of the first test script may be performed using the excel file comprising the configuration data. This first test script describes first program instructions to be executed by the server system 705 to perform the first test. In the above example, the first test script may comprise instructions to perform the step 2). The first test script may be a JavaScript created by using the "capture" function in XCode Instruments "Automation" template.

A second test script to perform the second test may be received by the server system 707 for example from the developer of the mobile application. The generation of the second test script may be performed using the excel file comprising the configuration data. The first and the second test scripts may be divided into a plurality of program components. Following the example of INTERVIEW ASSISTANT mobile application, the second test script may be divided into two program components associated to steps 1 and 3 respectively. The execution of each program component of the plurality of program components may perform a corresponding step in the second test. The first and second test scripts may be stored in the storage device 715.

Before performing the test case, the server system 709 may create jobs to execute the test case and schedule the created jobs. The term 'job' as used herein is a portion of a processing task that is executed by a data processing system. The server system 709 may be for example a Jenkins server and/or Hudson server. The server system 711 receives information from the server system 709 indicative of the scheduled jobs and in response the server system 711 may control the server system 705 and the server system 707 to perform the first test and the second test. The server system 711 may be for example the ROBOT framework and/or the ASTEC server of SAP.

The server system 711 may control the server system 705 and server system 707 such as to integrate the first and the second tests. This may be done by passing data from one step to the next, e.g. reading a value in the backend system 713 and check whether the same value appears in the mobile application. This is performed by defining import parameters in the first and the second test scripts. In the above example, the server system 711 may start the two scripts in a row, passing parameters from one to another (e.g. the name of the candidate from step one is passed to step two). For example, it may first execute on the server system 707 the program component of the second test script that corresponds to the step 1) and then control the server system 707 to send the documents attached to the candidate to the server system 705. The sever system 711 may then control the server system 705 to execute the first test script and send produced output data to the server system 707. Next, the server system 711 may control the server system 707 to execute the program component corresponding to the step 3).

The server system 711 may use a keyword driven test. For that, the server system 711 may determine a keyword table for the first and second test. This may be done by receiving the keyword table from the developer of the mobile application. The table has one or more entries and each entry comprises a keyword, wherein each keyword is associated with at least one program component and input data, wherein the keyword comprises character strings reflecting a command to execute the associated at least one program component using the input data. The server system 711 reads each keyword of the table and controls the server system 705 and the sever system 707 accordingly. Following the above example, the table may be as follows:

| Keyword | Test script ID | Import parameter | Export parameter |
|---|---|---|---|
| eCATT_test | ERECRUITING_CreateCandidate_1 | | Luis Testautomation |
| iOS test | iOS_CheckAndEvaluateCandidate | Luis Testautomation | New candidate rating |
| eCATT_test | ERECRUITING_CreateCandidate_2 | New candidate rating | |

The first column describes the keywords. The second column describes the test scripts ID. The subsequent columns describe the input and output parameters for each step of the first and the second test.

The server system 711 (ROBOT framework) may read the first keyword and control the server system 707 (eCATT) to execute the program component corresponding with the script ID ERECRUITING_CreateCandidate_1 which performs the step 1) . The output parameter of this step 1) may be indicative of the documents associated with the candidate Luis. Next, the server system 711 may read the second keyword and control the server system 705 (XCode) to execute the program component corresponding with the script ID iOS_CheckAndEvaluateCandidate using the input parameter indicative of the documents associated with the candidate, and thus performs the step 2). The output parameter of this step 2) may be indicative of the candidate rating. Finally, The server system 711 may read the third keyword and control the server system 707 (eCATT) to execute the program component corresponding with the script ID ERECRUITING_CreateCandidate_2 which performs the step 3) using the parameter input indicative of the candidate rating.

Only two test tools, XCode and eCATT are described above; however, persons of ordinary skill in the art should appreciate that other test tools such as JUnit and selenium may be added by adding for example corresponding keywords and associated scripts in the above table.

The server system 711 may generate a log of test results from the first and second tests performed on the mobile device and on the backend system. The log may comprise screenshots of mobile application outputs after execution of each program component.

### List of Reference Numerals

- 100: environment
- 102: user
- 104: mobile device
- 106: relay server
- 107: corporate intranet
- 108: authentication server
- 110: gateway
- 112: backend server
- 114: mobile app
- 116: client library
- 120: suite solution
- 122: gateway adapter
- 200: test automation architecture
- 202: test server
- 204: delivery architecture
- 206: test configuration server
- 208: storage server
- 210: a storage device
- 212: a testing client
- 214: Xcode instruments module
- 216: UI automation library
- 218: simulator
- 220: ASTEC test client
- 222: mobile device
- 224: relay server
- 226: authentication server
- 228: gateway
- 230: backend system
- 232: test plan
- 234: eCATT
- 254: Hudson Build Server
- 300: test automation tool
- 302: building server
- 304: test client
- 306: test server
- 600: computer system
- 602: processor
- 604: main memory
- 606: static memory
- 608: bus
- 610: video display
- 612: input device
- 614: cursor control device
- 616: drive unit
- 618: signal generation device
- 620: network interface device
- 622: computer readable medium
- 624: instructions
- 626: network
- 700: computer system
- 701: mobile application
- 703: mobile device
- 705-711: servers
- 713: backend systems
- 715: storage device
- 717-719: networks

## Claims

1. A method for testing a mobile application (701), the method comprising:
- installing the mobile application (701) to be operated on a mobile device (703) in the mobile device (703) based on a source code of the mobile application, the mobile application configured to operate with a backend system (713), wherein the mobile device (703) is remotely connected to the backend system (713) via a network (717,719);
- determining, by a test server (711), configuration data for a predefined test scenario of the mobile application (701), the predefined test scenario including at least one test case, wherein the at least one test case comprises a first test to be performed on the mobile device (703) and a second test to be performed on the backend system (713);
- providing a first server (705) for performing the first test on the mobile device (703);
- providing a second server (707) for performing the second test on the backend system (713); wherein the first and second servers are remotely connected via the network;
- receiving a first test script describing first program instructions to be executed by the first server (705) to perform the first test;
- receiving a second test script describing second program instructions to be executed by the second server (707) to perform the second test, wherein the first and second test scripts are adapted to exchange their respective intermediate output data at runtime of the scripts;
- storing the configuration data, the first and the second test scripts in a repository (715);
- creating jobs for performing the first test and the second test;
- scheduling the created jobs;
- in response to the scheduling controlling, by the test server (711), the first and the second server (705,707) to perform the first test and the second test respectively by automatically executing the first test script on the first server and the second test script on the second server using the stored configuration data; wherein the executing comprises exchanging the intermediate output data between the first server (705) and the second server (707) at runtime of the scripts; and
- generating, by the test server (711), a log of test results from the first and second tests performed on the mobile device (703) and on the backend system (713).

2. The method according to claim 1, wherein the first test comprises a first set of steps, wherein receiving the first test script further comprises dividing the first test script into a first group of program components, wherein each step of the first set of steps is performed by executing a corresponding program component of the first group of program components.

3. The method according to claim 1 or 2, wherein the second test comprises a second set of steps, wherein receiving the second test script further comprises dividing the second test script into a second group of program components, wherein each step of the second set of steps is performed by executing a corresponding program component of the second group of program components.

4. The method according to claim 2 or 3, wherein the program component comprises a program function.

5. The method according to claim 1, further comprising providing a table for the first and second test, the table having one or more entries, each entry comprises a keyword, wherein each keyword is associated with at least one program component and input data, wherein the keyword comprises character strings reflecting a command to execute the associated at least one program component using the input data.

6. The method according to claim 5, wherein the controlling comprises reading each keyword of the table and executing associated program components.

7. The method according to any of previous claims, wherein the creating and scheduling of the jobs is performed by a server that runs an application that monitors executions of repeated jobs, such as building a software project.

8. The method according to any of previous claims, wherein the configuration data comprises the first and second test scripts locations.

9. The method according to claim any of previous claims, wherein the executing comprises the steps of:
- executing the second test script for creating test data;
- executing the first test script using the test data;
- comparing output data resulting from the execution of the first test script with the test data.

10. The method according to claim 2, 3 or 4, wherein the generating a log of test results comprises capturing screenshots of mobile application outputs after execution of each program component.

11. A computer program product comprising computer executable instructions which, when executed, instruct a processor to perform the followings steps:
- install the mobile application (701) to be operated on a mobile device (703) in the mobile device (703) based on a source code of the mobile application, the mobile application configured to operate with a backend system (713), wherein the mobile device (703) is remotely connected to the backend system (713) via a network (717,719);
- determine configuration data for a predefined test scenario of the mobile application (701), the predefined test scenario including at least one test case, wherein the at least one test case comprises a first test to be performed on the mobile device (703) and a second test to be performed on the backend system (713);
- receive a first test script describing first program instructions to be executed by a first server (705) to perform the first test; wherein the first and second servers are remotely connected via the network;
- receive a second test script describing second program instructions to be executed by a second server (707) to perform the second test, wherein the first and second test scripts are adapted to exchange their respective intermediate output data at runtime of the scripts;
- store the configuration data, the first and the second test scripts in a repository (715);
- create jobs for performing the first test and the second test;
- schedule the created jobs;
- in response to the scheduling control the first and the second server (705,707) to perform the first test and the second test respectively by automatically executing the first test script on the first server and the second test script on the second server using the stored configuration data; wherein the executing comprises exchanging the intermediate output data between the first server (705) and the second server (707) at runtime of the scripts; and
- generate a log of test results from the first and second tests performed on the mobile device (703) and on the backend system (713).

12. A computer system (700) for testing a mobile application, the computer system comprising:
- a first server (705) configured to install the mobile application (701) to be operated on a mobile device (703) in the mobile device (703) based on a source code of the mobile application (701), the mobile application (701) configured to operate with a backend system (713), wherein the mobile device (703) is remotely connected to the backend system (713) via a network (717,719);
- a test server (711) configured to determine configuration data for a predefined test scenario of the mobile application (701), the predefined test scenario including at least one test case, wherein the at least one test case comprises a first test to be performed on the mobile device (703) and a second test to be performed on the backend system (713);
- the first server (705) configured to receive a first test script describing first program instructions to be executed by the first server (705) to perform the first test;
- a second server (707) configured to receive a second test script describing second program instructions to be executed by the second server (707) to perform the second test, wherein the first and second test scripts are adapted to exchange their respective intermediate output data at runtime of the scripts; wherein the first and second servers are remotely connected via the network;
- a repository (715) for storing the configuration data, the first and the second test scripts;
- a third server (709) configured to create jobs for performing the first test and the second test;
- the third server (709) configured to schedule the created jobs;
- the test server (711) configured to, in response to the scheduling, control the first and the second server to perform the first test and the second test respectively by automatically executing the first test script on the first server and the second test script on the second server using the stored configuration data; wherein the executing comprises exchanging the intermediate output data between the first server (705) and the second server (707) at runtime of the scripts; and
- the test server (711) configured to generate a log of test results from the first and second tests performed on the mobile device (703) and on the backend system (713).

## Patentansprüche

1. Verfahren zum Prüfen einer mobilen Anwendung (701), wobei das Verfahren umfasst:
- Installieren einer mobilen Anwendung (701), die auf Basis eines Quellcodes der mobilen Anwendung an einer mobilen Vorrichtung (703) betrieben werden soll, in der mobilen Vorrichtung (703), wobei die mobile Anwendung dafür ausgelegt ist, mit einem Backend-System (713) betrieben zu werden, wobei die mobile Vorrichtung (703) mit dem Backend-System (713) über ein Netz (717, 719) fernverbunden ist;
- Bestimmen von Konfigurationsdaten für ein vordefiniertes Prüfszenario der mobilen Anwendung (701) durch einen Prüfserver (711), wobei das vordefinierte Prüfszenario mindestens einen Prüffall einschließt, wobei der mindestens eine Prüffall eine erste Prüfung, die an der mobilen Vorrichtung (703) durchzuführen ist, und eine zweite Prüfung, die am Backend-System (713) durchzuführen ist, umfasst;
- Bereitstellen eines ersten Servers (705) zur Durchführung der ersten Prüfung an der mobilen Vorrichtung (703);
- Bereitstellen eines zweiten Servers (707) zur Durchführung der zweiten Prüfung am Backend-System (713); wobei der erste und der zweite Server über das Netz fernverbunden sind;
- Empfangen eines ersten Prüfungsskripts, das erste Programmbefehle beschreibt, die vom ersten Server (705) auszuführen sind, um die erste Prüfung durchzuführen;
- Empfangen eines zweiten Prüfungsskripts, das zweite Programmbefehle beschreibt, die vom zweiten Server (707) auszuführen sind, um die zweite Prüfung durchzuführen, wobei das erste und das zweite Prüfungsskript dafür ausgelegt sind, ihre jeweiligen zwischenzeitlichen Ausgabedaten während der Abarbeitung der Skripts auszutauschen;
- Speichern der Konfigurationsdaten, des ersten und des zweiten Prüfungsskripts in einem Repository (715);
- Erzeugen von Aufgaben zur Durchführung der ersten Prüfung und der zweiten Prüfung;
- Einplanung der erzeugten Aufgaben;
- Steuern des ersten und des zweiten Servers (705, 707) unter Verwendung der gespeicherten Konfigurationsdaten als Reaktion auf die Einplanung, um die erste Prüfung bzw. die zweite Prüfung durch automatisches Ausführen des ersten Prüfungsskripts am ersten Server und des zweiten Prüfungsskripts am zweiten Server durchzuführen; wobei das Ausführen ein Austauschen der zwischenzeitlichen Ausgabedaten zwischen dem ersten Server (705) und dem zweiten Server (707) während der Abarbeitung der Skripts (707) umfasst; und
- Erzeugen eines Protokolls von Prüfungsergebnissen aus der ersten und der zweiten Prüfung, die an der mobilen Vorrichtung (703) und am Backend-System (713) durchgeführt werden, durch den Prüfserver (711).

2. Verfahren nach Anspruch 1, wobei die erste Prüfung einen ersten Satz von Schritten umfasst, wobei das Empfangen des ersten Prüfungsskripts ferner das Teilen des ersten Prüfungsskripts in eine erste Gruppe von Programmkomponenten umfasst, wobei jeder Schritt des ersten Satzes von Schritten durch Ausführen einer entsprechenden Programmkomponente der ersten Gruppe von Programmkomponenten durchgeführt wird.

3. Verfahren nach Anspruch 1 oder 2, wobei die zweite Prüfung einen zweiten Satz von Schritten umfasst, wobei das Empfangen des zweiten Prüfungsskripts ferner das Teilen des zweiten Prüfungsskripts in eine zweite Gruppe von Programmkomponenten umfasst, wobei jeder Schritt des zweiten Satzes von Schritten durch Ausführen einer entsprechenden Programmkomponente der zweiten Gruppe von Programmkomponenten durchgeführt wird.

4. Verfahren nach Anspruch 2 oder 3, wobei die Programmkomponente eine Programmfunktion umfasst.

5. Verfahren nach Anspruch 1, ferner das Bereitstellen einer Tabelle für die erste und die zweite Prüfung umfassend, wobei die Tabelle einen oder mehrere Einträge aufweist, wobei jeder Eintrag ein Schlüsselwort umfasst, wobei jedes Schlüsselwort mit mindestens einer Programmkomponente und mit Eingabedaten assoziiert ist, wobei das Schlüsselwort Buchstabenfolgen umfasst, die einen Befehl zum Ausführen der mindestens einen assoziierten Programmkomponente unter Verwendung der Eingabedaten wiedergeben.

6. Verfahren nach Anspruch 5, wobei das Steuern das Lesen jedes Schlüsselwortes aus der Tabelle und das Ausführen assoziierter Programmkomponenten umfasst.

7. Verfahren gemäß einem der vorangehenden Ansprüche, wobei das Erzeugen und das Einplanen der Aufgaben von einem Server durchgeführt werden, auf dem eine Anwendung läuft, die Ausführungen wiederholter Aufgaben, wie etwa das Erstellen eines Software-Projekts, überwacht.

8. Verfahren gemäß einem der vorangehenden Ansprüche, wobei die Konfigurationsdaten die Orte des ersten und des zweiten Prüfungsskripts umfassen.

9. Verfahren nach einem der vorstehenden Ansprüche, wobei das Ausführen die folgenden Schritte umfasst:
- Ausführen des zweiten Prüfungsskripts zur Erzeugung von Prüfungsdaten;
- Ausführen des ersten Prüfungsskripts unter Verwendung der Prüfungsdaten;
- Vergleichen von Ausgabedaten, die ein Ergebnis der Ausführung des ersten Prüfungsskripts sind, mit den Prüfungsdaten.

10. Verfahren nach Anspruch 2, 3 oder 4, wobei das Erzeugen eines Protokolls von Prüfungsergebnissen das Aufnehmen von Screenshots von Ausgaben der mobilen Anwendung nach der Ausführung der einzelnen Programmkomponenten umfasst.

11. Computerprogrammprodukt, computerausführbare Befehle umfassend, die bei ihrer Ausführung einem Prozessor befehlen, die folgenden Schritte durchzuführen:
- Installieren der mobilen Anwendung (701), die auf Basis eines Quellcodes der mobilen Anwendung an einer mobilen Vorrichtung (703) betrieben werden soll, in der mobilen Vorrichtung (703), wobei die mobile Anwendung dafür ausgelegt ist, mit einem Backend-System (713) betrieben zu werden, wobei die mobile Vorrichtung (703) mit dem Backend-System (713) über ein Netz (717, 719) fernverbunden ist;
- Bestimmen von Konfigurationsdaten für ein vordefiniertes Prüfszenario der mobilen Anwendung (701), wobei das vordefinierte Prüfszenario mindestens einen Prüffall einschließt, wobei der mindestens eine Prüffall eine erste Prüfung, die an der mobilen Vorrichtung (703) durchzuführen ist, und eine zweite Prüfung, die am Backend-System (713) durchzuführen ist, umfasst;
- Empfangen eines ersten Prüfungsskripts, das erste Programmbefehle zur Durchführung der ersten Prüfung, die von einem ersten Server (705) auszuführen sind, beschreibt; wobei der erste und der zweite Server über das Netz fernverbunden sind;
- Empfangen eines zweiten Prüfungsskripts, das zweite Programmbefehle zur Durchführung der zweiten Prüfung, die von einem zweiten Server (707) auszuführen sind, beschreibt, wobei das erste und das zweite Prüfungsskript dafür ausgelegt sind, ihre jeweiligen zwischenzeitlichen Ausgabedaten während der Abarbeitung der Skripts auszutauschen;
- Speichern der Konfigurationsdaten, des ersten und des zweiten Prüfungsskripts in einem Repository (715);
- Erzeugen von Aufgaben zur Durchführung der ersten Prüfung und der zweiten Prüfung;
- Einplanen der erzeugten Aufgaben;
- Steuern des ersten und des zweiten Servers (705, 707) unter Verwendung der gespeicherten Konfigurationsdaten als Reaktion auf die Einplanung, um die erste Prüfung bzw. die zweite Prüfung durch automatisches Ausführen des ersten Prüfungsskripts am ersten Server und des zweiten Prüfungsskripts am zweiten Server durchzuführen; wobei das Ausführen ein Austauschen der zwischenzeitlichen Ausgabedaten zwischen dem ersten Server (705) und dem zweiten Server (707) umfasst, während die Skripts abgearbeitet werden; und
- Erzeugen eines Protokolls von Prüfungsergebnissen aus der ersten und der zweiten Prüfung, die an der mobilen Vorrichtung (703) und am Backend-System (713) durchgeführt werden.

12. Computersystem (700) zum Prüfen einer mobilen Anwendung, wobei das Computersystem umfasst:
- einen ersten Server (705), der dafür ausgelegt ist, die mobile Anwendung (701), die auf Basis eines Quellcodes der mobilen Anwendung (701) an einer mobilen Vorrichtung (703) betrieben werden soll, in der mobilen Vorrichtung (703) zu installieren, wobei die mobile Anwendung (701) dafür ausgelegt ist, mit einem Backend-System (713) betrieben zu werden, wobei die mobile Vorrichtung (703) mit dem Backend-System (713) über ein Netz (717, 719) fernverbunden ist;
- einen Prüfserver (711), der dafür ausgelegt ist, Konfigurationsdaten für ein vordefiniertes Prüfszenario der mobilen Anwendung (701) zu bestimmen, wobei das vordefinierte Prüfszenario mindestens einen Prüffall einschließt, wobei der mindestens eine Prüffall eine erste Prüfung, die an der mobilen Vorrichtung (703) durchzuführen ist, und eine zweite Prüfung, die am Backend-System (713) durchzuführen ist, umfasst;
- den ersten Server (705), der dafür ausgelegt ist, ein erstes Prüfungsskript zu empfangen, das erste Programmbefehle beschreibt, die vom ersten Server (705) auszuführen sind, um die erste Prüfung durchzuführen;
- einen zweiten Server (707), der dafür ausgelegt ist, ein zweites Prüfungsskript zu empfangen, das zweite Programmbefehle beschreibt, die vom zweiten Server (707) auszuführen sind, um die zweite Prüfung durchzuführen, wobei das erste und das zweite Prüfungsskript dafür ausgelegt sind, ihre jeweiligen zwischenzeitlichen Ausgabedaten während der Abarbeitung der Skripts auszutauschen; wobei der erste und der zweite Server über das Netz fernverbunden sind;
- ein Repository (715) zum Speichern der Konfigurationsdaten, des ersten und des zweiten Prüfungsskripts;
- einen dritten Server (709), der dafür ausgelegt ist, Aufgaben zur Durchführung der ersten Prüfung und der zweiten Prüfung zu erzeugen; wobei der dritte Server (709) dafür ausgelegt ist, die erzeugten Aufgaben einzuplanen;
- wobei der Prüfserver (711) dafür ausgelegt ist, als Reaktion auf die Einplanung den ersten und den zweiten Server (705, 707) unter Verwendung der gespeicherten Konfigurationsdaten zu steuern, um die erste Prüfung bzw. die zweite Prüfung durch automatisches Ausführen des ersten Prüfungsskripts am ersten Server und des zweiten Prüfungsskripts am zweiten Server durchzuführen; wobei das Ausführen ein Austauschen der zwischenzeitlichen Ausgabedaten zwischen dem ersten Server (705) und dem zweiten Server (707) während der Abarbeitung der Skripts (707) umfasst; und
- der Prüfserver (711) dafür ausgelegt ist, ein Protokoll von Prüfungsergebnissen aus der ersten und der zweiten Prüfung, die an der mobilen Vorrichtung (703) und am Backend-System (713) durchgeführt werden, zu erzeugen.

## Revendications

1. Procédé destiné à tester une application mobile (701), le procédé comprenant :
- l'installation de l'application mobile (701) pour qu'elle fonctionne sur un dispositif mobile (703) dans le dispositif mobile (703) sur la base d'un code source de l'application mobile, l'application mobile étant configurée pour fonctionner avec un système back-end (713), où le dispositif mobile (703) est connecté à distance au système back-end (713) par l'intermédiaire d'un réseau (717, 719) ;
- la détermination, par un serveur de test (711), de données de configuration pour un scénario de test prédéfini de l'application mobile (701), le scénario de test prédéfini comprenant au moins un cas à tester, où l'au moins un cas à tester comprend un premier test à effectuer sur le dispositif mobile (703) et un second test à effectuer sur le système back-end (713) ;
- la mise à disposition d'un premier serveur (705) destiné à effectuer le premier test sur le dispositif mobile (703) ;
- la mise à disposition d'un deuxième serveur (707) destiné à effectuer le second test sur le système back-end (713) ; où les premier et deuxième serveurs sont connectés à distance par l'intermédiaire du réseau ;
- la réception d'un premier script de test décrivant les premières instructions de programme à exécuter par le premier serveur (705) pour effectuer le premier test ;
- la réception d'une second script de test décrivant les secondes instructions de programme à exécuter par le deuxième serveur (707) pour effectuer le second test, où les première et second scripts de test sont conçus pour échanger leurs données de sorties intermédiaires respectives au moment de l'exécution des scripts ;
- le stockage des données de configuration des premier et seconds scripts de test dans un répertoire (715) ;
- la création de tâches destinées à effectuer le premier test et le second test ;
- la programmation des tâches créées ;
- en réponse à la programmation, la commande, par le serveur de test (711), au premier et au deuxième serveur (705, 707), d'effectuer le premier test et le second test respectivement par l'exécution de manière automatique du premier script de test sur le premier serveur et du second script de test sur le deuxième serveur en utilisant les données de configuration stockées ; où l'exécution comprend l'échange des données de sortie intermédiaires entre le premier serveur (705) et le deuxième serveur (707) au moment de l'exécution des scripts ;
et
- la génération, par le serveur de test (711), d'un journal des résultats de test à partir du premier et du second test effectués sur le dispositif mobile (703) et sur le système back-end (713).

2. Procédé selon la revendication 1, dans lequel le premier test comprend un premier ensemble d'étapes, dans lequel la réception du premier script de test comprend en outre la subdivision du premier script de test en un premier groupe de composants de programme, dans lequel chaque étape du premier ensemble d'étapes est effectuée par l'exécution d'un composant de programme correspondant du premier groupe de composants de programme.

3. Procédé selon la revendication 1 ou la revendication 2, dans lequel le second test comprend un second ensemble d'étapes, dans lequel la réception du second script de test comprend en outre la subdivision du seconde script de test en un second groupe de composants de programme, dans lequel chaque étape du second ensemble d'étapes est effectuée par l'exécution d'un composant de programme correspondant du second groupe de composants de programme.

4. Procédé selon la revendication 2 ou la revendication 3, dans lequel le composant de programme comprend une fonction de programme.

5. Procédé selon la revendication 1, comprenant en outre la mise à disposition d'un tableau pour le premier et le second test, le tableau ayant une ou plusieurs entrées, chaque entrée comprend un mot clé, où chaque mot clé est associé à au moins un composant de programme et une donnée d'entrée, où le mot clé comprend des chaînes de caractères renvoyant à une commande pour exécuter le composant associé de l'au moins un composant de programme en utilisant les données d'entrée.

6. Procédé selon la revendication 5, dans lequel la commande comprend la lecture de chaque mot clé du tableau et l'exécution des composants de programme associés.

7. Procédé selon l'une quelconque des revendications précédentes, dans lequel la création et la programmation des tâches sont effectuées par un serveur qui exécute une application qui surveille les exécutions des tâches répétitives, telles que l'élaboration d'un projet de logiciel.

8. Procédé selon l'une quelconque des revendications précédentes, dans lequel les données de configuration comprennent les localisations des premier et second scripts de test.

9. Procédé selon l'une quelconque des revendications précédentes, dans lequel l'exécution comprend les étapes :
- d'exécution du second script de test pour la création des données de test ;
- d'exécution du premier script de test en utilisant les données de test ;
- de comparaison des données de sortie résultant de l'exécution du premier script de test avec les données de test.

10. Procédé selon la revendication 2, 3 ou 4, dans lequel la génération d'un journal des résultats du test comprend la capture de saisies d'écran des sorties de l'application mobile après l'exécution de chaque composant de programme.

11. Produit-programme informatique comprenant des instructions exécutables par ordinateur qui, quand elles sont exécutées, commandent à un processeur d'effectuer les étapes suivantes :
- l'installation de l'application mobile (701) pour qu'elle fonctionne sur un dispositif mobile (703) dans le dispositif mobile (703) sur la base d'un code source de l'application mobile, l'application mobile étant configurée pour fonctionner avec un système back-end (713), où le dispositif mobile (703) est connecté à distance au système back-end (713) par l'intermédiaire d'un réseau (717, 719) ;
- la détermination des données de configuration pour un scénario de test prédéfini de l'application mobile (701), le scénario de test prédéfini comprenant au moins un cas à tester, où l'au moins un cas à tester comprend un premier test à effectuer sur le dispositif mobile (703) et un second test à effectuer sur le système back-end (713) ;
- la réception d'un première script de test décrivant les premières instructions de programme à exécuter par le premier serveur (705) pour effectuer le premier test ; où les premier et deuxième serveurs sont connectés à distance par l'intermédiaire du réseau ;
- la réception d'un second script de test décrivant les secondes instructions de programme à exécuter par le deuxième serveur (707) pour effectuer le second test, où les premier et second scripts de test sont conçus pour échanger leurs données de sorties intermédiaires respectives au moment de l'exécution des scripts ;
- le stockage des données de configuration, des premier et second scripts de test dans un répertoire (715) ;
- la création de tâches destinées à effectuer le premier test et le second test ;
- la programmation des tâches créées ;
- en réponse à la programmation, la commande au premier et au deuxième serveur (705, 707) d'effectuer le premier test et le second test respectivement par l'exécution de manière automatique du premier script de test sur le premier serveur et du second script de test sur le deuxième serveur en utilisant les données de configuration stockées ; où l'exécution comprend l'échange des données de sortie intermédiaires entre le premier serveur (705) et le deuxième serveur (707) au moment de l'exécution des scripts ; et
- la génération d'un journal des résultats du test à partir des premier et second tests effectués sur le dispositif mobile (703) et sur le système back-end (713).

12. Système informatique (700) destiné à tester une application mobile, le système informatique comprenant :
- un premier serveur (705) configuré pour installer l'application mobile (701) pour qu'elle fonctionne sur un dispositif mobile (703) dans le dispositif mobile (703) sur la base d'un code source de l'application mobile (701), l'application mobile (701) étant configurée pour fonctionner avec un système back-end (713), où le dispositif mobile (703) est connecté à distance au système back-end (713) par l'intermédiaire d'un réseau (717, 719) ;
- un serveur de test (711), configuré pour déterminer les données de configuration pour un scénario de test prédéfini de l'application mobile (701), le scénario de test prédéfini comprenant au moins un cas à tester, où l'au moins un cas à tester comprend un premier test à effectuer sur le dispositif mobile (703) et un second test à effectuer sur le système back-end (713) ;
- le premier serveur (705) étant configuré pour recevoir un premier script de test décrivant les premières instructions de programme à exécuter par le premier serveur (705) pour effectuer le premier test
- un deuxième serveur (707) configuré pour recevoir un second script de test décrivant les secondes instructions de programme à exécuter par le deuxième serveur (707) pour effectuer le second test, où les premier et second scripts de test sont conçus pour échanger leurs données de sorties intermédiaires respectives au moment de l'exécution des scripts ; où les premier et deuxième serveurs sont connectés à distance par l'intermédiaire du réseau ;
- un répertoire (715) destiné à stocker les données de configuration, les premier et second scripts de test ;
- un troisième serveur (709), configuré pour créer des tâches destinées à effectuer le premier test et le second test ;
- le troisième serveur (709) étant configuré pour programmer les tâches créées ;
- le serveur de test (711) étant configuré, en réponse à la programmation, pour commander au premier et au deuxième serveur d'effectuer le premier test et le second test respectivement par l'exécution de manière automatique du premier script de test sur le premier serveur et du second script de test sur le deuxième serveur en utilisant les données de configuration stockées ; où l'exécution comprend l'échange des données de sortie intermédiaires entre le premier serveur (705) et le deuxième serveur (707) au moment de l'exécution des scripts ;
et
- le serveur de test (711) est configuré pour générer un journal des résultats du test à partir du premier et du second test effectués sur le dispositif mobile (703) et sur le système back-end (713).
